# DEMANDE DE BREVET EUROPEEN

(11) **EP 3 731 426 A1**
(43) Date de publication de la demande: **28.10.2020**
(21) Numéro de dépôt: 20169320.7
(22) Date de dépôt: 14.04.2020
(51) Int. Cl.: H04B 5/00, G06F 3/06

(54) **ECHANGE DE DONNÉES AU SEIN D'UN TRANSPONDEUR DYNAMIQUE ET TRANSPONDEUR CORRESPONDANT**

(30) Priorité: 25.04.2019 FR 1904338
(71) Demandeur: STMicroelectronics (Rousset) SAS, 13790 Rousset (FR)
(72) Inventeur: MANGIONE, Jose, 06250 MOUGINS (FR)
(74) Mandataire: Casalonga

(57) **Abrégé**

Procédé de transfert de données entre une première interface de communication et une deuxième interface de communication (IF1) d'un circuit intégré, la première interface de communication étant une interface de communication sans contact et la deuxième interface (IF2) étant couplée à une unité de traitement (MCU) externe au circuit intégré (IC), le procédé comprenant un premier mode de transfert (MDTR1) comportant un stockage temporaire des données transférées dans un premier moyen de mémoire volatile (MM1) accessible simultanément ou quasi simultanément d'une part par des moyens de traitement (MT) couplés à ladite première interface de communication (IF1) et d'autre part par ladite unité de traitement (MCU) via ladite deuxième interface de communication (IF2).

## Description

Des modes de mise en œuvre et de réalisation de l'invention concernent le transfert de données au sein d'un circuit intégré, entre une interface sans contact et une interface, par exemple une interface I²C, connectée à une unité de traitement, par exemple un microcontrôleur, externe au circuit intégré.

L'invention s'applique tout particulièrement aux transpondeurs sans contact, notamment des transpondeurs NFC (« Near Field Communication »), par exemple des étiquettes (tags), destinés à servir de passerelle entre un appareil externe de communication sans contact, par exemple un téléphone mobile cellulaire, plus connu sous la dénomination anglo-saxonne de « smartphone » et un microcontrôleur d'un système connecté, par exemple un objet connecté tel qu'une montre connectée, ou bien un équipement connecté de domotique, ou encore un équipement public connecté, par exemple un lampadaire connecté, sans que ces exemples ne soient limitatifs.

De tels transpondeurs servant de passerelle peuvent être également appelés « transpondeurs dynamiques » puisque les données stockées temporairement dans leur mémoire peuvent varier au cours du temps soit du fait de l'appareil externe de communication sans contact, soit du fait du microcontrôleur.

La communication champ proche, plus connue par l'homme du métier sous la dénomination anglosaxonne NFC (« Near Field Communication ») est une technologie de connectivité sans fil qui permet une communication sur une courte distance, par exemple 10 cm, entre des dispositifs électroniques, comme par exemple des cartes à puce sans contact ou des étiquettes, et des lecteurs.

La technologie NFC est particulièrement adaptée pour connecter tout type de dispositif utilisateur et permet des communications rapides et faciles.

Un transpondeur sans contact est un transpondeur capable d'échanger des informations via une antenne avec un lecteur sans contact, selon un protocole de communication sans contact.

Un transpondeur NFC, qui est un transpondeur sans contact, est un transpondeur compatible avec la technologie NFC.

La technologie NFC est une plate-forme technologique ouverte normalisée dans la norme ISO/IEC 18092 et ISO/IEC 21481 mais incorpore de nombreuses normes déjà existantes comme par exemple les protocoles type A et type B définis dans la norme ISO-14443 qui peuvent être des protocoles de communication utilisables dans la technologie NFC.

La technologie sans contact peut aussi être utilisée dans les transpondeurs RFID (Radio Frequency IDentification) compatibles avec les normes ISO 15693 et ISO 18000-3.

Lors d'une transmission d'information entre un lecteur et un transpondeur, le lecteur génère un champ magnétique par l'intermédiaire de son antenne qui est généralement dans les normes classiquement utilisées, une onde sinusoïdale (la porteuse) à 13,56MHz.

Pour transmettre des informations depuis le lecteur vers le transpondeur, le lecteur utilise une modulation d'amplitude de ladite porteuse.

Le transpondeur quant à lui comporte des moyens de traitement configurés pour démoduler la porteuse reçue afin d'obtenir les données transmises depuis le lecteur.

Pour une transmission d'informations du transpondeur vers le lecteur, le lecteur génère le champ magnétique (la porteuse) sans modulation. L'antenne du transpondeur module alors le champ généré par le lecteur, en fonction des informations à transmettre. La fréquence de cette modulation correspond à une sous-porteuse de ladite porteuse. La fréquence de cette sous porteuse dépend du protocole de communication utilisé et peut être par exemple égale à 848 kHz.

Cette modulation est effectuée en modifiant la charge connectée aux bornes de l'antenne du transpondeur.

Deux modes de fonctionnement sont alors possibles, un mode passif ou un mode actif.

Dans le mode passif, le transpondeur rétro-module l'onde issue du lecteur pour transmettre des informations et n'intègre pas, pour la transmission des informations, de moyens d'émission proprement dits, ou émetteur, capable par exemple de générer son propre champ magnétique lors de l'émission. Un tel transpondeur dépourvu d'émetteur est appelé transpondeur passif, par opposition à un transpondeur actif qui comporte un émetteur.

Généralement un transpondeur passif est dépourvu d'alimentation car il utilise l'onde issue du lecteur pour alimenter son circuit intégré.

Dans certaines applications le transpondeur passif peut incorporer une alimentation, par exemple une pile.

Dans le mode de fonctionnement actif, le lecteur et le transpondeur dit actif génèrent tous les deux un champ électromagnétique. Généralement, ce mode de fonctionnement est utilisé lorsque le transpondeur actif est pourvu d'une source d'alimentation propre, par exemple une batterie.

Chacun des dispositifs NFC (lecteur et transpondeur) transmet les données en utilisant un schéma de modulation.

Là encore, la modulation se traduit par une modification de charge et l'on parle alors d'une communication par modulation active de charge.

Par rapport à un mode de communication passif, on obtient des distances de fonctionnement plus importantes qui peuvent aller jusqu'à 20 cm en fonction du protocole utilisé. En augmentant la taille de l'antenne du lecteur, et/ou la sensibilité du lecteur, il est alors possible d'augmenter la distance jusqu'à des distances pouvant aller jusqu'à plusieurs dizaines de cm, par exemple 60cm.

Par ailleurs, l'utilisation d'une modulation active de charge permet d'utiliser des antennes très petites.

La présente invention s'applique aussi bien à des transpondeurs passifs qu'à des transpondeurs actifs.

Lors de l'échange entre le transpondeur et le lecteur sans contact, par exemple le « smartphone », les informations ou données utiles sont encapsulées dans des trames ayant un format défini en fonction du type de protocole utilisé. Les moyens de traitement du transpondeur sont notamment configurés pour désencapsuler les données qui vont être transférées à l'unité de traitement externe, et pour en sens inverse encapsuler les données transmises depuis l'unité de traitement externe, dans des trames qui vont être transmises au lecteur («smartphone par exemple) par une communication sans contact.

Dans certaines applications, la quantité de données échangées entre le lecteur, le transpondeur dynamique et l'unité de traitement externe peut être de l'ordre de plusieurs kilo-octets voire beaucoup plus.

Cependant actuellement la vitesse de transfert est limitée.

Et c'est la mémoire physique du transpondeur dynamique qui limite l'efficacité du transfert entre le lecteur et le transpondeur. Cette mémoire physique sert en effet, comme indiqué précédemment, à stocker temporairement les données échangées entre les moyens de traitement du transpondeur et l'unité de traitement, par exemple un microcontrôleur, externe au circuit intégré.

En effet un transpondeur classique peut être équipé d'une mémoire non volatile de grande capacité mémoire mais lente en écriture ou bien d'une mémoire volatile d'accès rapide mais de faible capacité mémoire.

Dans le premier cas (mémoire non volatile de grande capacité), une grande quantité de données peut être écrite dans la limite de la capacité mémoire de la mémoire non volatile avant la lecture de ces données vers le microcontrôleur mais le transfert global des données entre les moyens de traitement du transpondeur et le microcontrôleur, et donc entre le lecteur sans contact externe et le microcontrôleur, est lent.

Dans le second cas (mémoire volatile de petite capacité), les données sont écrites par trames successives dans la mémoire volatile qui sont ensuite successivement lues par le microcontrôleur. Chaque trame doit être lue avant que la prochaine puisse être écrite, limitant donc taille de la trame à la taille de la mémoire physique.

Par ailleurs chaque transfert élémentaire d'une trame est rapide mais, comme la mémoire est accessible séquentiellement soit par les moyens de traitement du transpondeur (et donc par le lecteur sans contact externe) soit par le microcontrôleur, il existe un temps de latence entre le transfert de chaque trame ce qui impacte négativement la vitesse globale de transfert ou débit global (« overall data rate »).

Il existe par conséquent un besoin de configurer un transpondeur dynamique de façon à ce qu'une très grande quantité de données puisse être échangées, de façon rapide, et sans impacter la vitesse globale de transfert.

Selon un aspect, il est proposé un procédé de transfert de données entre une première interface de communication et une deuxième interface de communication d'un circuit intégré, par exemple un circuit intégré d'un transpondeur, tel qu'un transpondeur dynamique.

La première interface de communication est une interface de communication sans contact.

La deuxième interface peut être une interface série ou parallèle. Elle peut être par exemple une interface du type I²C (« Inter-Integrated Circuit) ou SPI (« Serial Peripheral Interface »)

Cette deuxième interface est couplée à une unité de traitement, par exemple un microcontrôleur, externe au circuit intégré ou au transpondeur.

Le procédé comprend un premier mode de transfert, incluant par exemple un transfert de données de la première interface de communication vers la deuxième interface de communication et un transfert de données de la deuxième interface de communication vers la première interface de communication, et comportant un stockage temporaire des données transférées dans un premier moyen de mémoire volatile accessible simultanément ou quasi simultanément d'une part par des moyens de traitement, par exemple une logique câblée et/ou un microprocesseur, couplés à ladite première interface de communication et d'autre part par ladite unité de traitement, par exemple le microcontrôleur, via ladite deuxième interface de communication.

L'utilisation d'une mémoire volatile accessible simultanément par les moyens de traitement couplés à l'interface sans contact et par le microcontrôleur via la deuxième interface, permet d'émuler une mémoire volatile « virtuelle » de grande capacité mémoire à partir d'une mémoire volatile physique de petite capacité mémoire tout en offrant une vitesse d'échange de données rapide sans impacter la vitesse globale de transfert.

Ceci permet de par exemple transférer des trames plus grandes, voire largement plus grandes que la taille physique de la mémoire interne du transpondeur, éliminant la contrainte de limiter la taille maximale d'un trame à transférer à la taille physique de la mémoire interne du transpondeur et augmentant la vitesse globale de transfert ou débit global (« overall data rate »).

En effet, par exemple, les moyens de traitement peuvent par exemple écrire dans une première partie de la mémoire pendant que simultanément ou quasi simultanément le microcontrôleur peut lire une deuxième partie de la mémoire précédemment écrite par les moyens de traitement, les rôles des première et deuxième parties étant alternativement et successivement inversés, ce qui libère constamment une partie de la mémoire pour une écriture, et offre donc une capacité mémoire virtuellement infinie.

Le même principe peut s'appliquer en sens inverse pour une écriture par le microcontrôleur et une lecture par les moyens de traitement.

L'expression « quasi-simultanément » s'entend comme signifiant par exemple « simultanément à une latence de départ près ».

Cette latence de départ correspond au temps nécessaire pour écrire en mémoire suffisamment de données provenant soit des moyens de traitement soit de l'unité de traitement externe (microcontrôleur) afin que leur lecture en mémoire puisse démarrer respectivement soit par l'unité de traitement via la deuxième interface soit par les moyens de traitement.

Il est avantageux que le premier moyen de mémoire soit accessible à une première vitesse d'accès par les moyens de traitement et à une deuxième vitesse d'accès par ladite unité de traitement, la deuxième vitesse d'accès étant supérieure ou égale, et préférentiellement supérieure, à la première vitesse d'accès.

Ceci est tout particulièrement intéressant pour des transpondeurs dynamiques sans contact destinés à échanger des données avec un lecteur sans contact à une vitesse, par exemple de 400 kbits/s, inférieure à la vitesse d'accès du microcontrôleur à la mémoire volatile via la deuxième interface, par exemple 1 Mbits/s pour une deuxième interface du type I²C ou 10 Mbits/s pour une deuxième interface de type SPI (« Serial Peripheral Interface »).

En effet le lecteur peut ainsi envoyer des trames ayant une longueur plus grande que la capacité mémoire du premier moyen de mémoire (mémoire physique du transpondeur), et ce sans que cette mémoire n'impose, en raison de sa capacité, de pause dans la transmission des trames (bien entendu des pauses peuvent être imposées par le protocole sans contact lui-même mais elles ne sont pas imposées du fait de la mémoire interne du transpondeur) et le transpondeur peut lire de manière asynchrone ces trames sans limiter la vitesse d'envoi des trames par le lecteur.

La latence de départ pour la lecture de la première trame peut être ajustée par exemple par la taille du premier moyen de mémoire ou en définissant un nombre suffisant de données écrites pour déclencher la lecture.

Plusieurs possibilités existent pour réaliser le premier moyen de mémoire.

Selon une première variante possible le premier moyen de mémoire peut comporter une architecture à « double mémoires tampon » (« double buffer » selon une dénomination anglosaxone).

Plus précisément, ledit premier moyen de mémoire peut comprendre au moins une première mémoire volatile et une deuxième mémoire volatile accessibles soit en lecture soit en écriture.

Bien qu'en pratique on se limitera à deux mémoires, il n'est pas exclu de pouvoir utiliser plus de deux mémoires accessibles soit en lecture soit en écriture.

Dans cette première variante, les données reçues sur la première interface sont contenues dans au moins une trame ayant une longueur supérieure à la capacité mémoire de chacune des mémoires volatiles, et pour chaque trame reçue, les moyens de traitement en extraient les données et les segmentent en paquets successifs.

Ces paquets comportent plusieurs mots de données, par exemple plusieurs octets de données.

La taille des paquets correspond avantageusement à la capacité mémoire de chaque mémoire volatile.

Selon un mode de mise en œuvre adapté à cette variante, le stockage temporaire comprend pour un transfert de données de la première interface de communication vers la deuxième interface de communication,
une écriture sans interruption par les moyens de traitement, des paquets successifs de données d'une trame alternativement dans la première mémoire et dans la deuxième mémoire, et
une lecture par l'unité de traitement des paquets successifs de la trame alternativement dans la deuxième mémoire et dans la première mémoire, ladite lecture étant simultanée pour certains au moins desdits paquets.

En effet, alors que le passage d'une mémoire à l'autre ne doit pas interrompre l'écriture des paquets (autrement dit l'écriture par les moyens de traitement, des paquets successifs de données d'une trame alternativement dans la première mémoire et dans la deuxième mémoire, est faite avantageusement sans interruption), la lecture des mémoires peut être éventuellement interrompue de façon contrôlée par l'unité de traitement externe. Dans ce cas la lecture de certains paquets peut ne pas être totalement simultanée avec l'écriture de certains paquets pour autant que l'écriture de tous les paquets se fasse avantageusement de façon continue.

Avantageusement, pour initier ce processus, on peut attendre que la première mémoire soit complètement écrite avant de commencer la lecture de ladite mémoire.

Encore pour un transfert de données de la première interface de communication vers la deuxième interface de communication, ledit stockage temporaire comprend selon un mode de mise en œuvre,
a) une écriture par les moyens de traitement, d'un paquet de la trame dans la première mémoire et une lecture simultanée par l'unité de traitement du paquet précédemment écrit dans la deuxième mémoire,
b) puis lorsque ladite première mémoire est écrite, une écriture par les moyens de traitement, du prochain paquet de la trame dans ladite deuxième mémoire et une lecture simultanée par l'unité de traitement, du paquet précédemment écrit dans ladite première mémoire,
c) puis lorsque la deuxième mémoire est écrite, éventuellement au moins une répétition des étapes a) et b) pour les éventuels paquets suivants jusqu'au transfert complet desdites données de ladite trame.

En ce qui concerne un transfert de données de la deuxième interface de communication vers la première interface de communication en vue de l'encapsulation de ces données dans une trame, le stockage temporaire comprend selon un mode de mise en œuvre,
une lecture sans interruption par les moyens de traitement, des données par paquets successifs alternativement dans la deuxième mémoire et dans la première mémoire, et
lorsque l'une des mémoire a été lue par les moyens de traitement, une écriture par l'unité de traitement, d'un paquet dans cette mémoire simultanément à la lecture du contenu de l'autre mémoire par les moyens de traitement.

Encore pour un transfert de données de la deuxième interface de communication vers la première interface de communication, le stockage temporaire comprend selon un mode de mise en œuvre,
d) une lecture par les moyens de traitement, d'un paquet desdites données dans la première mémoire précédemment écrit par l'unité de traitement et une écriture simultanée par l'unité de traitement, du prochain paquet dans la deuxième mémoire précédemment lue par les moyens de traitement,
e) puis lorsque ledit paquet a été lu par les moyens de traitement dans la première mémoire, une lecture par les moyens de traitement, dudit prochain paquet dans la deuxième mémoire et une écriture simultanée par l'unité de traitement du paquet succédant audit prochain paquet dans la première mémoire,
f) puis lorsque la deuxième mémoire a été lue, éventuellement au moins une répétition des étapes d) et e) pour les éventuels paquets suivants jusqu'au transfert complet desdites données à transmettre dans ladite trame.

Dans une autre variante possible, ledit premier moyen de mémoire peut comprendre une mémoire circulaire ayant un pointeur d'écriture et un pointeur de lecture.

Dans cette autre variante, les données reçues sur la première interface sont également contenues dans au moins une trame ayant une longueur supérieure à la capacité mémoire de la mémoire circulaire, et pour chaque trame reçue, les moyens de traitement, cette fois-ci ne segmentent pas les données de la trame en paquets, mais extraient les données à la volée, mot par mot.

En théorie chaque mot pourrait ne comprendre qu'un seul bit, mais en pratique il comprend plusieurs bits, par exemple huit bits de façon à former un octet.

Selon un mode de mise en œuvre adapté à cette autre variante, le stockage temporaire comprend pour un transfert de données de la première interface de communication vers la deuxième interface de communication,
une écriture par les moyens de traitement, des données par mots successifs dans la mémoire circulaire au rythme du pointeur d'écriture, et
une lecture simultanée par l'unité de traitement, au rythme du pointeur de lecture, des mots successifs précédemment écrits dans la mémoire circulaire,
le pointeur de lecture cheminant derrière le pointeur d'écriture.

En ce qui concerne un transfert de données de la deuxième interface de communication vers la première interface de communication, le stockage temporaire comprend, selon un mode de mise en œuvre, une lecture par les moyens de traitement, de mots successifs desdites données dans la mémoire circulaire au rythme du pointeur de lecture, chaque mot lu ayant été au préalable écrit par l'unité de traitement externe au rythme du pointeur d'écriture en remplacement d'un mot précédemment lu par les moyens de traitement.

De façon à être par exemple compatible avec des architectures de transpondeurs classiques, le procédé peut comprendre un deuxième mode de transfert comportant un stockage temporaire des données dans un deuxième moyen de mémoire accessible séquentiellement par les moyens de traitement et par ladite unité de traitement via ladite deuxième interface de communication.

A cet égard, et de façon non limitative, plusieurs possibilités existent.

Le deuxième moyen de mémoire peut être distinct du premier moyen de mémoire, par exemple une mémoire non volatile.

Le deuxième moyen de mémoire peut être aussi le premier moyen de mémoire configuré de façon à former une seule mémoire accessible séquentiellement, et non plus simultanément, par les moyens de traitement et par le microcontrôleur.

Il est possible d'effectuer une sélection sur commande du premier ou du deuxième mode de transfert.

Une telle sélection peut comprendre par exemple un choix entre le premier moyen de mémoire et le deuxième moyen de mémoire lorsque ces deux moyens de mémoire sont présents sur le circuit intégré, ou bien une reconfiguration du premier moyen de mémoire en deuxième moyen de mémoire.

Bien entendu il est possible d'alterner entre les deux modes de transfert.

Selon un mode de mise en œuvre, la première interface de communication est une interface compatible avec une communication en champ proche (NFC : « Near Field Communication »).

Comme indiqué ci-avant, la deuxième interface de communication peut être une interface du type SPI ou I²C.

La première vitesse d'accès peut être supérieure ou égale à 100 Kbits/s et inférieure à 848 Kbits/s, par exemple égale à 400 Kbits/s et la deuxième vitesse d'accès, supérieure ou égale à la première vitesse d'accès, peut être supérieure ou égale à par exemple 1 Mbits/s.

En variante la première vitesse peut être égale à 106 Kbits/s et la deuxième vitesse peut être égale à 400 Kbits/s.

La première interface du circuit intégré est avantageusement couplée à une antenne de façon à former un transpondeur sans contact communiquant selon un protocole de communication sans contact avec un appareil externe de communication sans contact.

Selon un autre aspect il est proposé un circuit intégré ou un transpondeur, tel qu'un transpondeur dynamique, comprenant un circuit intégré, le circuit intégré comprenant une première interface de communication sans contact, une deuxième interface de communication configurée pour être couplée à une unité de traitement externe au circuit intégré ou au transpondeur, des moyens de traitement couplés à la première interface, et un premier moyen de mémoire volatile configuré pour, dans un premier mode de transfert, incluant par exemple un transfert de données de la première interface de communication vers la deuxième interface de communication et un transfert de données de la deuxième interface de communication vers la première interface de communication, stocker temporairement des données transférées entre les deux interfaces de communication, le premier moyen de mémoire volatile étant configuré pour être accessible simultanément ou quasi simultanément d'une part par les moyens de traitement et d'autre part par ladite unité de traitement via ladite deuxième interface de communication.

Selon un mode de réalisation, le premier moyen de mémoire est accessible à une première vitesse d'accès par les moyens de traitement et à une deuxième vitesse d'accès par ladite unité de traitement, la deuxième vitesse d'accès étant supérieure ou égale à la première vitesse d'accès.

Selon une variante, ledit premier moyen de mémoire comprend au moins une première mémoire volatile et une deuxième mémoire volatile accessibles soit en lecture soit en écriture.

Dans cette variante, les données destinées à être reçues sur la première interface sont contenues dans au moins une trame ayant une longueur supérieure à la capacité mémoire de chacune des mémoires volatiles, et pour chaque trame reçue, les moyens de traitement sont configurés pour en extraire les données et les segmenter en paquets successifs.

Selon un mode de réalisation adapté à cette variante, pour un transfert de données de la première interface de communication vers la deuxième interface de communication,
les moyens de traitement sont configurés pour effectuer une écriture sans interruption des paquets successifs de données d'une trame alternativement dans la première mémoire et dans la deuxième mémoire, et
la deuxième interface de communication est configurée pour délivrer au premier moyen de mémoire des signaux de commande de lecture émanant de l'unité de traitement et délivrer à l'unité de traitement des paquets successifs de la trame alternativement lus dans la deuxième mémoire et dans la première mémoire, ladite délivrance étant simultanée pour certains au moins desdits paquets.

En effet comme expliqué précédemment, les moyens de traitement sont avantageusement configurés pour effectuer ladite écriture sans interruption alors que l'unité de traitement peut éventuellement interrompre de façon contrôlée ladite lecture pour autant que ladite écriture se poursuive sans interruption.

Selon un mode de réalisation, les moyens de traitement sont configurés pour effectuer une lecture d'un paquet de la trame dans la première mémoire et la deuxième interface de communication est configurée pour simultanément délivrer une commande de lecture à la deuxième mémoire émanant de l'unité de traitement et délivrer à l'unité de traitement le paquet de la trame précédemment écrit dans la deuxième mémoire,
b) puis lorsque ladite première mémoire est écrite, les moyens de traitement sont configurés pour effectuer une écriture du prochain paquet de la trame dans ladite deuxième mémoire et la deuxième interface de communication est configurée pour simultanément délivrer une commande de lecture à la première mémoire émanant de l'unité de traitement et délivrer à l'unité de traitement le paquet de la trame précédemment écrit dans ladite première mémoire,
c) puis lorsque la deuxième mémoire est écrite, les moyens de traitement et la deuxième interface de traitement sont configurés pour effectuer éventuellement au moins une répétition des opérations mentionnées aux points a) et b) pour les éventuels paquets suivants jusqu'au transfert complet desdites données de ladite trame.

Selon un mode de réalisation, pour un transfert de données de la deuxième interface de communication vers la première interface de communication en vue de l'encapsulation de ces données dans une trame,
les moyens de traitement sont configurés pour effectuer une lecture sans interruption des données de la trame par paquets successifs alternativement dans la deuxième mémoire et dans la première mémoire, et
lorsque l'une des mémoire a été lue par les moyens de traitement, la deuxième interface de communication est configurée pour délivrer une commande d'écriture à cette mémoire émanant de l'unité de traitement et délivrer à cette mémoire un paquet à écrire émanant de l'unité de traitement, les moyens de traitement étant configuré pour simultanément lire le contenu de l'autre mémoire.
Encore pour un transfert de données de la deuxième interface de communication vers la première interface de communication et selon un mode de réalisation,
d) les moyens de traitement sont configurés pour effectuer une lecture d'un paquet desdites données dans la première mémoire précédemment écrit par l'unité de traitement via la deuxième interface de communication, et la deuxième interface de communication est configurée pour simultanément délivrer une commande d'écriture à la deuxième mémoire précédemment lue par les moyens de traitement et délivrer à cette deuxième mémoire le prochain paquet à écrire émanant de l'unité de traitement,
e) puis lorsque ledit paquet a été lu par les moyens de traitement dans la première mémoire, (comme indiqué ci-avant les moyens de traitement sont configurés pour effectuer cette lecture de l'étape d) sans interruption), les moyens de traitement sont configurés pour effectuer une lecture dudit prochain paquet dans la deuxième mémoire et la deuxième interface de communication est configurée pour simultanément délivrer une commande d'écriture à la première mémoire et délivrer à cette première mémoire le paquet succédant audit prochain paquet et émanant de l'unité de traitement,
f) puis lorsque la deuxième mémoire a été lue, les moyens de traitement et la deuxième interface de traitement sont configurés pour effectuer éventuellement au moins une répétition des opérations mentionnées aux points d) et e) pour les éventuels paquets suivants jusqu'au transfert complet desdites données à transmettre dans ladite trame.

Selon une autre variante, ledit premier moyen de mémoire comprend une mémoire volatile circulaire ayant un pointeur d'écriture et un pointeur de lecture.

Dans cette autre variante, les données reçues sur la première interface sont également contenues dans au moins une trame ayant une longueur supérieure à la capacité mémoire de la mémoire circulaire, et pour chaque trame reçue, les moyens de traitement sont configurés pour extraire les données à la volée, mot par mot, par exemple octet par octet.

Selon un mode de réalisation adaptée à cette autre variante, pour un transfert de données de la première interface de communication vers la deuxième interface de communication,
les moyens de traitement sont configurés pour effectuer une écriture des données par mots successifs dans la mémoire circulaire au rythme du pointeur d'écriture, et
la deuxième interface de communication est configurée pour simultanément délivrer des commandes de lecture à la mémoire circulaire et délivrer à l'unité de traitement, au rythme du pointeur de lecture, des mots successifs précédemment écrits dans la mémoire circulaire,
le pointeur de lecture étant configuré pour cheminer derrière le pointeur d'écriture.

Selon un mode de réalisation, pour un transfert de données de la deuxième interface de communication vers la première interface de communication, les moyens de traitement sont configurés pour effectuer une lecture de mots successifs desdites données dans la mémoire circulaire au rythme du pointeur de lecture, chaque mot lu ayant été au préalable écrit par l'unité de traitement via ladite deuxième interface de communication au rythme du pointeur d'écriture en remplacement d'un mot précédemment lu par les moyens de traitement.

Le circuit intégré peut comprendre un deuxième moyen de mémoire (qui peut réutiliser ou non le premier moyen de mémoire dans une configuration à accès séquentiel) configuré pour, dans un deuxième mode de transfert, stocker temporairement des données transférées entre les deux interfaces de communication, le deuxième moyen de mémoire étant configuré pour être accessible séquentiellement par les moyens de traitement et par ladite unité de traitement via ladite deuxième interface de communication.

Selon un mode de réalisation, le circuit intégré comprend des moyens de sélection configurés pour sélectionner sur commande le premier ou le deuxième mode de transfert.

Selon un mode de réalisation, la première interface de communication est une interface compatible avec une communication en champ proche.

Selon un mode de réalisation, la deuxième interface de communication est une interface du type SPI ou I²C.

Selon un autre aspect il est proposé un transpondeur, comprenant un circuit intégré tel que défini ci-avant, une antenne couplée à la première interface de communication, le transpondeur étant configuré pour communiquer selon un protocole de communication sans contact avec un appareil externe de communication sans contact.

Selon un autre aspect, il est proposé un système comprenant un transpondeur tel que défini ci-avant et l'unité de traitement couplée à la deuxième interface de communication.

Ce système peut être un système connecté, par exemple un objet connecté tel qu'une montre connectée, ou bien un équipement connecté de domotique, ou encore un équipement public connecté, par exemple un lampadaire connecté, sans que ces exemples ne soient limitatifs.

D'autres caractéristiques et avantages de l'invention apparaîtront à l'examen de la description détaillée de modes de mise en œuvre et de réalisation, nullement limitatifs, et des dessins annexés sur lesquels :
[Fig 1] illustre schématiquement un mode de réalisation de l'invention,
[Fig 2] illustre schématiquement un mode de mise en œuvre de l'invention,
[Fig 3] illustre schématiquement un mode de mise en œuvre de l'invention,
[Fig 4] illustre schématiquement un autre mode de réalisation de l'invention,
[Fig 5] illustre schématiquement un autre mode de mise en œuvre de l'invention,
[Fig 6] illustre schématiquement un autre mode de mise en œuvre de l'invention,
[Fig 7] illustre schématiquement un autre mode de réalisation de l'invention, et
[Fig 8] illustre schématiquement un autre mode de mise en œuvre de l'invention.

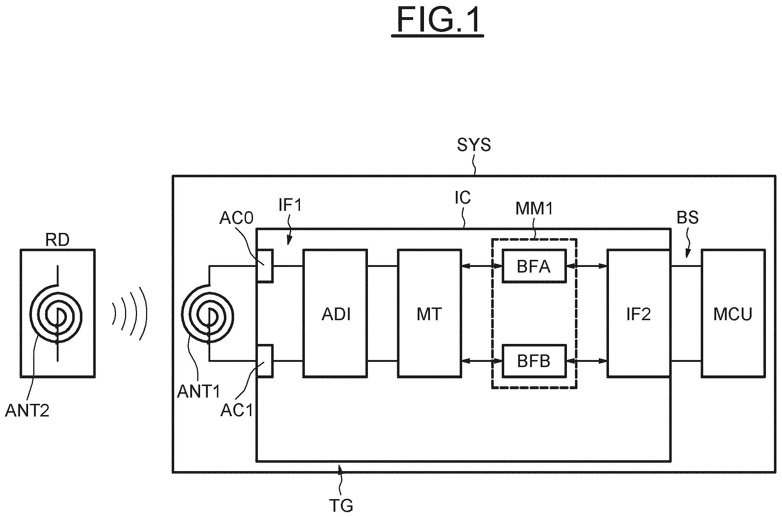

Sur la figure 1, la référence TG désigne un transpondeur sans contact. Dans cet exemple, le transpondeur est un transpondeur passif sans contact configuré pour communiquer avec un lecteur RD, par exemple un téléphone mobile cellulaire du type « smartphone », équipé d'une antenne sans contact ANT2, via son antenne ANT1 en utilisant un signal de porteuse ayant une fréquence par exemple de 13,56MHz.

Le transpondeur TG est ici un transpondeur capable de communiquer selon un protocole de communication sans contact utilisant par exemple la technologie de communication sans proche (NFC).

Ce transpondeur peut être également un transpondeur RFID utilisant cette technologie NFC.

Ce transpondeur TG comprend un circuit intégré IC, par exemple un circuit intégré de la famille ST25 commercialisé par la société STMicroelectronics.

Le circuit intégré IC comporte deux bornes AC0 et AC1 respectivement connectées aux deux bornes de l'antenne ANT1.

Les deux bornes AC0 et AC1 forment ici une première interface de communication sans contact IF1 du circuit intégré IC.

Le circuit intégré IC comporte également des moyens de traitement MT, comportant par exemple, un circuit de récupération d'énergie, un microprocesseur et/ou une logique câblée.

Les moyens de traitement sont notamment configurés pour délivrer une tension d'alimentation à l'ensemble du circuit intégré à partir du champ magnétique reçu du lecteur, traiter les informations reçues du lecteur et rétro-moduler le signal de porteuse en vue de la transmission d'informations vers le lecteur.

Le circuit intégré IC comporte également de façon classique un réseau d'adaptation d'impédance ADI formant avec l'antenne ANT1 un circuit résonant à la fréquence porteuse, ici 13,56 MHz.

Le circuit intégré IC comporte également une deuxième interface de communication IF2, ici une interface du type I²C reliée par un bus I²C, référencé BS, à une unité de traitement externe au circuit intégré, référencée MCU, par exemple un microcontrôleur. De façon classique, le microcontrôleur MCU est l'équipement maître sur le bus BS et l'interface de communication IF2 est un équipement esclave.

Entre les moyens de traitement MT et la deuxième interface de communication IF2 est couplé un premier moyen de mémoire volatile MM1 dont on reviendra plus en détail ci-après sur la fonctionnalité et la structure.

L'ensemble transpondeur-microcontrôleur MCU fait partie d'un système SYS, par exemple un appareil connecté.

Le transpondeur TG est ici un transpondeur, dit dynamique, agissant comme une passerelle pour la transmission d'informations en provenance du lecteur RD à destination du microcontrôleur MCU et, en sens inverse pour la transmission d'informations provenant du microcontrôleur MCU à destination du lecteur RD.

Dans la technologie NFC la transmission des informations ou données de fait généralement sous forme de trames, comme c'est le cas par exemple pour le protocole type A de la norme ISO-14443.

Les trames échangées comportent des en-têtes, des bits de données, des bits de parité ou de contrôle de redondance cyclique (bits CRC).

Classiquement, en émission les bits de parité ou CRC sont calculés par les moyens de traitement à partir des bits de données qui doivent être réellement transmis sur le canal de transmission entre les deux antennes ANT1 et ANT2, et d'une règle de calcul prédéterminé qui est en général propre à la norme de communication utilisée.

En réception, les bits de parité ou CRC reçus sont vérifiés par les moyens de traitement MT en procédant à un calcul de ces bits de parité ou CRC à partir des bits de données reçus et de ladite règle de calcul puis à une comparaison de ces bits de parité ou CRC calculés avec les bits de parité extraits des trames reçues.

Les moyens de traitement MT sont par conséquent configurés pour, en réception, extraire les données des trames reçues pour les écrire dans le premier moyen de mémoire MM1.

Le microcontrôleur MCU est alors configuré pour lire ces données dans le premier moyen de mémoire MM1 via la deuxième interface de communication IF2.

En émission, c'est-à-dire du microcontrôleur MCU vers le lecteur RD, le microcontrôleur MCU écrit les données à transmettre dans le premier moyen de mémoire MM1 via la deuxième interface de communication IF2.

Les moyens de traitement sont configurés pour lire ces données dans le moyen de mémoire MM1 et les transmettre au lecteur RD par rétro-modulation, en calculant notamment les bits de parité ou CRC et en encapsulant toutes ces données dans des trames.

Le premier moyen de mémoire volatile MM1 est d'une façon générale accessible simultanément ou quasi simultanément d'une part par les moyens de traitement MT, d'autre part par l'unité de traitement MCU via la deuxième interface de communication IF2.

Dans l'exemple illustré sur la figure 1, le premier moyen de mémoire MM1 comporte une architecture à double mémoire tampon (« double buffer »).

Plus précisément, le premier moyen de mémoire MM1 comprend une première mémoire volatile BFA et une deuxième mémoire volatile BFB, toutes deux accessibles soit en lecture soit en écriture.

Lors de l'échange des données entre les moyens de traitement et l'unité de traitement externe MCU, ces données vont être stockées temporairement dans le premier moyen de mémoire MM1.

Dans une technologie NFC, la taille des trames peut être par exemple de 4 kilo-octets, 32 kilo-octets ou 256 kilo-octets.

La vitesse ou débit de transmission radiofréquence entre le lecteur et le transpondeur ou entre le transpondeur et le lecteur est par exemple de 400 kilo-bits par seconde.

Par ailleurs, le débit supporté par la deuxième interface de communication IF2 peut être par exemple de l'ordre de 1 méga-bits par seconde.

Par ailleurs, la capacité mémoire de chacune des mémoires BFA et BFB est par exemple de 128 octets.

En conséquence, que ce soit dans un sens ou dans l'autre, les données échangées vont être temporairement stockées dans le premier moyen de mémoire MM1 par paquets, par exemple ici des paquets de 128 octets.

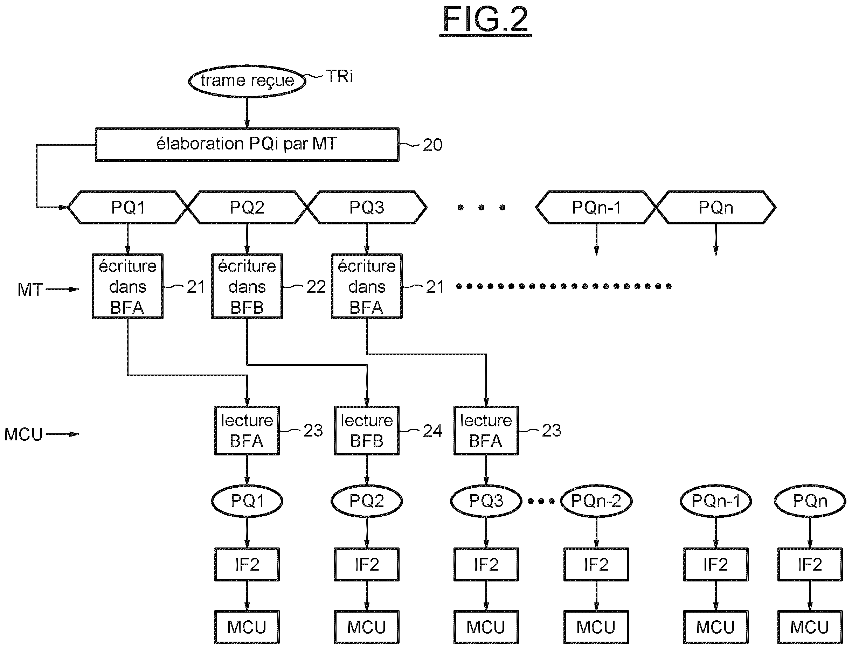

On se réfère maintenant plus particulièrement à la figure 2 pour illustrer un exemple de transfert de données de la première interface IF1 vers la deuxième interface IF2.

On suppose dans cet exemple que le microcontrôleur MCU n'interrompt pas son opération de lecture des données écrites dans le premier moyen de mémoire MM1.

Dans cette direction de transfert, les données reçues sur la première interface sont contenues dans au moins une trame ayant une longueur supérieure à la capacité mémoire de chacune des mémoires volatiles, et pour chaque trame reçue, les moyens de traitement MT en extraient les données et les segmentent en paquets successifs PQi, par exemple ici des paquets de 128 octets.

Plus précisément, les moyens de traitement MT, pendant la réception des données des trames reçues, vont écrire les données par paquets successifs PQi, alternativement dans la première mémoire BFA et dans la deuxième mémoire BFB, et l'unité de traitement MCU va lire simultanément des paquets successifs PQj alternativement dans la deuxième mémoire et dans la première mémoire.

Ce processus d'alternance d'écriture et de lecture dans les deux mémoires, débute une fois que l'une des mémoires, par exemple la mémoire BFA, a été complètement écrite par les moyens de traitement.

Plus précisément, dans l'étape 20, les moyens de traitement MT extraient les données de la trame TRi reçue et les segmentent de façon séquentielle en paquets PQi. Le premier paquet PQ1 est écrit par les moyens de traitement MT dans la première mémoire BFA par exemple.

Lorsque cette première mémoire est complètement écrite, un signal est transmis à l'unité de traitement MCU par l'intermédiaire d'une broche spécifique (non représentée ici) de façon à lui indiquer que le paquet PQ1 peut être lu.

Simultanément à la lecture dans l'étape 23 par le microcontrôleur MCU du paquet PQ1 stocké dans la première mémoire BFA, les moyens de traitement MT écrivent (étape 22) le deuxième paquet PQ2 dans la deuxième mémoire BFB.

Le paquet PQ1 est quant à lui délivré via l'interface IF2 au microcontrôleur MCU.

Compte tenu du fait que le débit de la liaison radiofréquence (400 kilobits par seconde par exemple) est inférieur au débit de la liaison I2C (1 mégabit par seconde par exemple) la vitesse d'accès des mémoires BFA et BFB par les moyens de traitement MT est inférieure à la vitesse d'accès de ces mêmes mémoires par le microcontrôleur MCU.

Aussi, la lecture 23 du paquet PQ1 dans la mémoire BFA s'effectue plus rapidement que l'écriture du paquet PQ2 dans la mémoire BFB.

Par conséquent, la mémoire BFA est prête à être écrite avec un autre paquet alors que les moyens de traitement n'ont pas encore fini d'écrire le paquet PQ2 dans la mémoire BFB.

Ainsi, lorsque les moyens de traitement MT ont terminé d'écrire le paquet PQ2 dans la mémoire BFB, ils peuvent aussitôt écrire le paquet PQ3 dans la mémoire BFA (étape 21) tandis que simultanément, le microcontrôleur MCU va lire (étape 24) le paquet PQ2 qui avait été stocké dans la mémoire BFB.

Ce paquet PQ2 va être transmis au microcontrôleur MCU via la deuxième interface IF2.

Le paquet PQ3 sera lu (étape 23) dans la mémoire BFA par le microcontrôleur MCU au pas suivant pendant que simultanément, les moyens de traitement MT vont écrire le paquet PQ4 dans la mémoire BFB.

Ces opérations se répètent ainsi pour les paquets suivants jusqu'au dernier paquet PQn.

Ainsi, les moyens de traitement écrivent dans l'une des deux mémoires pendant que le microcontrôleur lit simultanément ou quasi simultanément l'autre mémoire, les rôles des première et deuxième mémoires étant alternativement et successivement inversés ce qui libère constamment une mémoire BFA ou BFB pour une écriture, et offre donc une capacité mémoire virtuellement infinie.

Par ailleurs, comme le première moyen de mémoire MM1 est accessible à une première vitesse d'accès par les moyens de traitement MT et à une deuxième vitesse d'accès par le microcontrôleur MCU, la deuxième vitesse d'accès (1 mégabits par seconde par exemple) étant supérieure ou égale à la première vitesse d'accès (400 kilobits par seconde) il n'y a alors aucun temps de latence entre les paquets d'une même trame, ou de latence entre les trames de données successives échangées entre le lecteur sans contact et le transpondeur car il y a toujours l'une des deux mémoires BFA ou BFB qui est disponible en écriture par les moyens de traitement lors de l'arrivée d'un paquet de données.

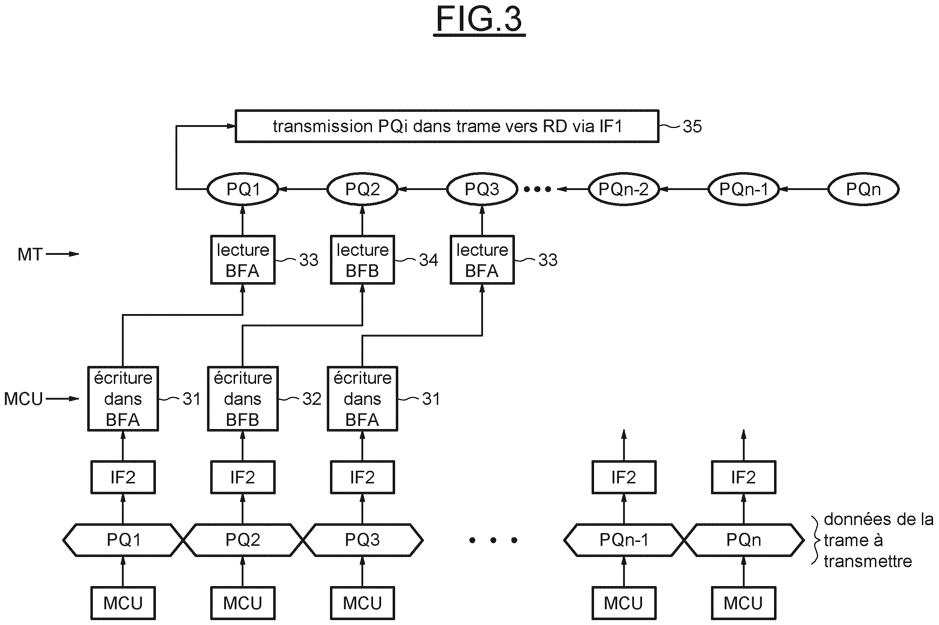

On se réfère maintenant plus particulièrement à la figure 3 pour illustrer un exemple de transfert de données de la deuxième interface de communication IF2 vers la première interface de communication IF1 pour une transmission 35 des paquets au sein d'une trame vers le lecteur RD.

D'une façon générale, le stockage temporaire comprend ici une lecture par les moyens de traitement MT des paquets successifs alternativement dans la deuxième mémoire BFB et dans la première mémoire BFA et,
lorsque l'une des mémoires a été lue par les moyens de traitement MT, il y a une écriture par le microcontrôleur MCU d'un paquet dans cette mémoire simultanément à la lecture du contenu de l'autre mémoire par les moyens de traitement MT.

Plus précisément, le premier paquet PQ1 délivré par le microcontrôleur MCU est transmis à la deuxième interface IF2 pour être écrit (étape 31) dans par exemple la première mémoire BFA.

Sans attendre les autres paquets, dès que le lecteur RD initie la lecture de la trame, les moyens de traitement MT, dans l'étape 35, élaborent alors l'en-tête de la trame et commencent à transmettre le paquet PQ1 vers le lecteur RD via la première interface de communication IF1, après lecture 33 de ce paquet PQ1 dans la première mémoire BFA.

La deuxième mémoire BFB étant disponible, simultanément à la lecture 33 de la première mémoire BFA, le microcontrôleur MCU délivre le deuxième paquet PQ2 à la deuxième interface de communication IF2 afin que celui-ci soit écrit (étape 32) dans cette deuxième mémoire BFB.

Lorsque les moyens de traitement MT ont terminé la lecture du contenu de la mémoire BFA pour en extraire le paquet PQ1, un signal est envoyé au microcontrôleur MCU pour indiquer que cette première mémoire BFA est disponible pour une écriture.

Le microcontrôleur MCU écrit donc via l'interface IF2 le paquet PQ3 dans la première mémoire BFA tandis que le deuxième paquet PQ2 est lu par les moyens de traitement MT dans la deuxième mémoire BFB (étape 34).

Les opérations qui viennent d'être décrites se répètent pour les paquets suivants jusqu'au dernier paquet PQn, complétant la trame qui doit être transmise du microcontrôleur MCU vers le lecteur RD.

Là encore, il n'y a pas de latence de latence entre les paquets de la même trame, et entre les trames transmises du transpondeur vers le lecteur RD car le microcontrôleur MCU aura écrit dans une des deux mémoires un paquet bien avant que les moyens de traitement MT soient prêts à lire ce paquet.

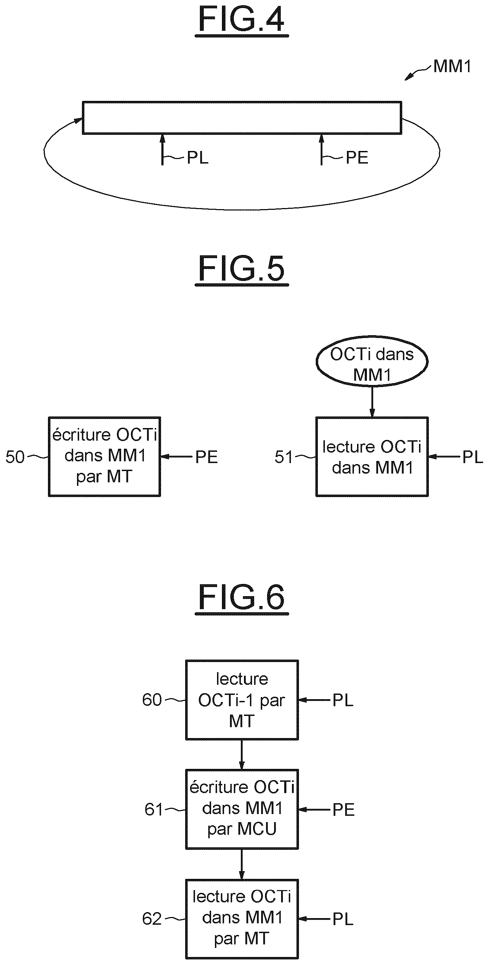

Dans une autre variante de réalisation illustrée schématiquement sur la figure 4, le premier moyen de mémoire MM1 peut comprendre une mémoire circulaire ayant un pointeur d'écriture PE et un pointeur de lecture PL.

Dans cette autre variante, les données reçues sur la première interface sont également contenues dans au moins une trame ayant une longueur supérieure à la capacité mémoire de la mémoire circulaire, et pour chaque trame reçue, les moyens de traitement MT sont configurés pour extraire les données à la volée, mot par mot, par exemple octet par octet.

Par exemple, la capacité mémoire de cette mémoire circulaire peut être égale à 256 octets bien que cet exemple ne soit pas limitatif.

Comme illustré sur la figure 5, pour un transfert de données de la première interface de communication IF1 vers la deuxième interface de communication IF2, il est prévu une écriture 50 par les moyens de traitement MT des données par octets successifs OCTi dans la mémoire circulaire au rythme du pointeur d'écriture PE.

Par ailleurs, il y a une lecture simultanée 51 par le microcontrôleur MCU au rythme du pointeur de lecture PL des octets successifs OCTi précédemment écrits dans la mémoire circulaire MM1.

Et, le pointeur de lecture chemine derrière le pointeur d'écriture.

En d'autres termes, le pointeur d'écriture est toujours en avance par rapport au pointeur de lecture dans son parcours des adresses de la mémoire circulaire MM1.

Un indicateur de nombre de données disponibles à la lecture, tel un compteur, et un comparateur ayant une valeur de référence qui peut être soit programmable soit fixée, sert à signaler au microcontrôleur MCU qu'un certain nombre de données sont disponibles à la lecture. Ainsi le microcontrôleur MCU pourra à sa guise venir lire la mémoire MM1.

De même un indicateur que le pointeur d'écriture rejoint le pointeur de lecture par comparaison avec cette même valeur de référence (ou une autre valeur de référence) indiquera au microcontrôleur MCU qu'une lecture doit être impérativement faite pour éviter une perte de données (« overflow »).

Ces moyens configurés pour délivrer à la deuxième interface de communication IF2 une première information et une deuxième information destinées à l'unité de traitement MCU, la première information indiquant le nombre de données disponibles à la lecture dans la mémoire circulaire MM1, la deuxième information signalant un risque de perte de données en cas de non lecture de la mémoire circulaire MM1 par l'unité de traitement MCU, peuvent être par exemple incorporés au moins en partie dans les moyens de traitement MT.

Pour un transfert de données de la deuxième interface de communication IF2 vers la première interface de communication IF1, le stockage temporaire des données comprend comme illustré schématiquement sur la figure 6 une lecture 62 par les moyens de traitement MT d'octets de données successifs OCTi dans la mémoire circulaire MM1 au rythme du pointeur de lecture PL.

Chaque octet lu OCTi a été au préalable écrit (étape 61) par l'unité de traitement externe MCU au rythme du pointeur d'écriture PE en remplacement d'un octet OCTi-1 précédemment lu (étape 60) par les moyens de traitement MT au rythme du pointeur de lecture.

Alors qu'on vient de décrire un premier mode de transfert possible des données, utilisant le premier moyen de mémoire MM1 accessible simultanément ou quasi simultanément par les moyens de traitement MT et par le microcontrôleur MCU, il est possible, de façon à être par exemple compatible avec des architectures de transpondeurs classiques, de prévoir un deuxième mode de transfert comportant un stockage temporaire des données dans un deuxième moyen de mémoire accessible séquentiellement par les moyens de traitement MT et par l'unité de traitement MCU via la deuxième interface de communication.

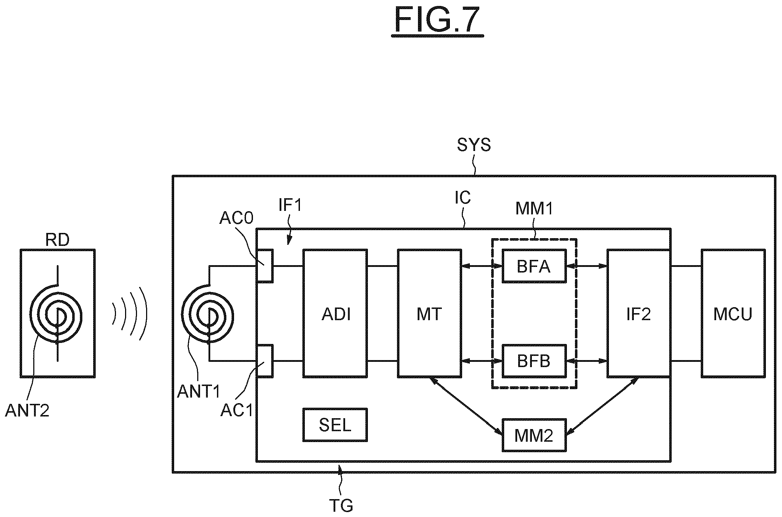

Ce mode de réalisation est illustré schématiquement sur la figure 7.

Dans cet exemple, le deuxième moyen de mémoire MM2 peut être une mémoire non volatile.

En variante, comme indiqué précédemment, on pourrait également configurer les deux mémoires BFA et BFB de façon à ce qu'elles ne forment qu'une seule mémoire MM2 accessible séquentiellement par les moyens de traitement MT et le microcontrôleur MCU et non pas simultanément.

En d'autres termes, un module (les moyens de traitement ou le microcontrôleur) utilise la mémoire MM2, en écriture ou en lecture, l'autre module attend que le premier module ait terminé avant de pouvoir utiliser la mémoire MM2 en lecture ou en écriture.

En fait, ce deuxième mode de transfert est un mode de transfert classiquement implémenté dans les transpondeurs actuels.

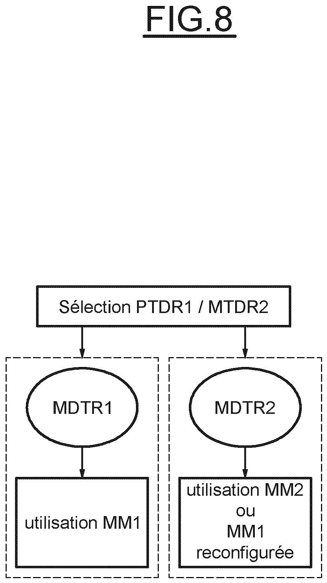

Il est également possible, comme illustré sur la figure 8, d'effectuer une sélection sur commande du premier mode de transfert MDTR1 ou du deuxième mode de transfert MDTR2.

Si le premier mode de transfert MDTR1 est sélectionné, alors on utilise le premier moyen de mémoire MM1, dans son architecture double buffer ou dans son architecture mémoire circulaire par exemple.

Si le deuxième mode de transfert MDTR2 est sélectionné, alors on utilise la mémoire MM2 avec les accès séquentiels ou bien le moyen de mémoire MM1 reconfiguré en unique mémoire à accès séquentiel.

Des moyens de sélection SEL, réalisés par exemple par une circuiterie logique, sélectionnent le premier mode de transfert MDTR1 ou le second mode de transfert MDTR2.

## Revendications

1. Procédé de transfert de données entre une première interface de communication et une deuxième interface de communication d'un circuit intégré d'un transpondeur, la première interface de communication (IF1) étant une interface de communication sans contact et la deuxième interface (IF2) étant couplée à une unité de traitement (MCU) externe au transpondeur, le procédé comprenant un premier mode de transfert (MDTR1) incluant un transfert de données de la première interface de communication (IF1) vers la deuxième interface de communication (IF2) et un transfert de données de la deuxième interface de communication (IF2) vers la première interface de communication (IF1), et comportant un stockage temporaire des données transférées dans un premier moyen de mémoire volatile (MM1) accessible simultanément ou quasi simultanément d'une part par des moyens de traitement (MT) couplés à ladite première interface de communication (IF1) et d'autre part par ladite unité de traitement (MCU) via ladite deuxième interface de communication (IF2).

2. Procédé selon la revendication 1, dans lequel le premier moyen de mémoire (MM1) est accessible à une première vitesse d'accès par les moyens de traitement et à une deuxième vitesse d'accès par ladite unité de traitement, la deuxième vitesse d'accès étant supérieure ou égale à la première vitesse d'accès.

3. Procédé selon la revendication 1 ou 2, dans lequel ledit premier moyen de mémoire (MM1) comprend au moins une première mémoire volatile (BFA) et une deuxième mémoire volatile (BFB) accessibles soit en lecture soit en écriture, et dans lequel les données reçues sur la première interface (TRi) sont contenues dans au moins une trame (TRi) ayant une longueur supérieure à la capacité mémoire de chacune des mémoires volatiles (BFA, BFB), et pour chaque trame reçue, les moyens de traitement (MT) en extraient les données et les segmentent en paquets successifs (PQi).

4. Procédé selon la revendication 3, dans lequel le stockage temporaire comprend pour un transfert de données de la première interface de communication (IF1) vers la deuxième interface de communication (IF2),
une écriture sans interruption par les moyens de traitement (MT), des paquets successifs de donnée d'une trame alternativement dans la première mémoire et dans la deuxième mémoire, et
une lecture par l'unité de traitement (MCU), des paquets successifs de la trame alternativement dans la deuxième mémoire et dans la première mémoire, ladite lecture étant simultanée pour certains au moins des paquets.

5. Procédé selon la revendication 4, dans lequel ledit stockage temporaire comprend
a) une écriture par les moyens de traitement (MT), d'un paquet de la trame dans la première mémoire et une lecture simultanée par l'unité de traitement (MCU) du paquet précédemment écrit dans la deuxième mémoire,
b) puis lorsque ladite première mémoire est écrite, une écriture par les moyens de traitement (MT), du prochain paquet de la trame dans ladite deuxième mémoire et une lecture simultanée par l'unité de traitement (MCU), du paquet précédemment écrit dans ladite première mémoire,
c) puis lorsque la deuxième mémoire est écrite, éventuellement au moins une répétition des étapes a) et b) pour les éventuels paquets suivants jusqu'au transfert complet desdites données de la trame.

6. Procédé selon l'une des revendications 3 à 4, dans lequel le stockage temporaire comprend pour un transfert de données de la deuxième interface de communication (IF2) vers la première interface de communication (IF1) en vue de l'encapsulation de ces données dans une trame,
une lecture sans interruption par les moyens de traitement (MT), des données par paquets successifs alternativement dans la deuxième mémoire (BFB) et dans la première mémoire (BFA), et
lorsque l'une des mémoire a été lue par les moyens de traitement (MT), une écriture par l'unité de traitement (MCU), d'un paquet dans cette mémoire simultanément à la lecture du contenu de l'autre mémoire par les moyens de traitement.

7. Procédé selon la revendication 6, dans lequel le stockage temporaire comprend,
d) une lecture par les moyens de traitement (MT), d'un paquet desdites données dans la première mémoire précédemment écrit par l'unité de traitement et une écriture simultanée par l'unité de traitement (MCU), du prochain paquet dans la deuxième mémoire précédemment lue par les moyens de traitement,
e) puis lorsque ledit paquet a été lu par les moyens de traitement (MT) dans la première mémoire, une lecture par les moyens de traitement (MT), dudit prochain paquet dans la deuxième mémoire et une écriture simultanée par l'unité de traitement (MCU) du paquet succédant audit prochain paquet dans la première mémoire,
f) puis lorsque la deuxième mémoire a été lue, éventuellement au moins une répétition des étapes d) et e) pour les éventuels paquets suivants jusqu'au transfert complet desdites données à transmettre dans ladite trame.

8. Procédé selon la revendication 1 ou 2, dans lequel ledit premier moyen de mémoire (MM1) comprend une mémoire volatile circulaire ayant un pointeur d'écriture (PE) et un pointeur de lecture (PL).

9. Procédé selon la revendication 8, dans lequel les données reçues sur la première interface sont contenues dans au moins une trame ayant une longueur supérieure à la capacité mémoire de la mémoire circulaire (MM1), et pour chaque trame reçue, les moyens de traitement (MT) extraient les données à la volée, mot par mot.

10. Procédé selon la revendication 9, dans lequel le stockage temporaire comprend pour un transfert de données de la première interface de communication (IF1) vers la deuxième interface de communication (IF2),
une écriture par les moyens de traitement, des données par mots successifs dans la mémoire circulaire au rythme du pointeur d'écriture, et
une lecture simultanée par l'unité de traitement, au rythme du pointeur de lecture, des mots successifs précédemment écrits dans la mémoire circulaire,
le pointeur de lecture (PL) cheminant derrière le pointeur d'écriture (PE).

11. Procédé selon la revendication 9 ou 10, dans lequel le stockage temporaire comprend pour un transfert de données de la deuxième interface de communication (IF2) vers la première interface de communication (IF1), une lecture par les moyens de traitement (MT), de mots successifs desdites données successives dans la mémoire circulaire au rythme du pointeur de lecture, chaque mot lu ayant été au préalable écrit par l'unité de traitement externe (MCU) au rythme du pointeur d'écriture en remplacement d'un mot précédemment lu par les moyens de traitement (MT).

12. Procédé selon l'une des revendications précédentes, comprenant un deuxième mode de transfert (MDTR2) comportant un stockage temporaire des données dans un deuxième moyen de mémoire (MM2) accessible séquentiellement par les moyens de traitement et par ladite unité de traitement via ladite deuxième interface de communication.

13. Procédé selon la revendication 12, comprenant une sélection sur commande du premier (MDTR1) ou du deuxième mode de transfert (MDTR2).

14. Transpondeur, comprenant un circuit intégré comprenant une première interface de communication sans contact (IF1), une deuxième interface de communication (IF2) configurée pour être couplée à une unité de traitement (MCU) externe au transpondeur, des moyens de traitement (MT) couplés à la première interface, et un premier moyen de mémoire volatile (MM1) configuré pour, dans un premier mode de transfert (MDTR1) incluant un transfert de données de la première interface de communication (IF1) vers la deuxième interface de communication (IF2) et un transfert de données de la deuxième interface de communication (IF2) vers la première interface de communication (IF1), stocker temporairement des données transférées entre les deux interfaces de communication, le premier moyen de mémoire volatile (MM1) étant configuré pour être accessible simultanément ou quasi simultanément d'une part par les moyens de traitement (MT et d'autre part par ladite unité de traitement (MCU) via ladite deuxième interface de communication (IF2).

15. Transpondeur selon la revendication 14, dans lequel le premier moyen de mémoire (MM1) est accessible à une première vitesse d'accès par les moyens de traitement et à une deuxième vitesse d'accès par ladite unité de traitement, la deuxième vitesse d'accès étant supérieure ou égale à la première vitesse d'accès.

16. Transpondeur selon la revendication 14 ou 15, dans lequel ledit premier moyen de mémoire (MM1) comprend au moins une première mémoire volatile (BFA) et une deuxième mémoire volatile (BFB) accessibles soit en lecture soit en écriture, et dans lequel les données destinées à être reçues sur la première interface sont contenues dans au moins une trame ayant une longueur supérieure à la capacité mémoire de chacune des mémoires volatiles (BFA, BFB), et pour chaque trame reçue, les moyens de traitement (MT) sont configurés pour en extraire les données et les segmenter en paquets successifs.

17. Transpondeur selon la revendication 16, dans lequel pour un transfert de données de la première interface de communication (IF1)vers la deuxième interface de communication (IF2),
les moyens de traitement (MT) sont configurés pour effectuer une écriture sans interruption des paquets successifs de données d'une trame alternativement dans la première mémoire et dans la deuxième mémoire, et
la deuxième interface de communication est configurée pour délivrer au premier moyen de mémoire des signaux de commande de lecture émanant de l'unité de traitement et délivrer à l'unité de traitement des paquets successifs de la trame alternativement lus dans la deuxième mémoire et dans la première mémoire, ladite délivrance étant simultanée pour certains au moins des paquets.

18. Transpondeur selon la revendication 17, dans lequel
a) les moyens de traitement (MT) sont configurés pour effectuer une lecture d'un paquet de la trame dans la première mémoire et la deuxième interface de communication est configurée pour simultanément délivrer une commande de lecture à la deuxième mémoire émanant de l'unité de traitement et délivrer à l'unité de traitement (MCU) le paquet de la trame précédemment écrit dans la deuxième mémoire,
b) puis lorsque ladite première mémoire est écrite, les moyens de traitement (MT) sont configurés pour effectuer une écriture du prochain paquet de la trame dans ladite deuxième mémoire et la deuxième interface de communication est configurée pour simultanément délivrer une commande de lecture à la première mémoire émanant de l'unité de traitement et délivrer à l'unité de traitement le paquet de la trame précédemment écrit dans ladite première mémoire,
c) puis lorsque la deuxième mémoire est écrite, les moyens de traitement et la deuxième interface de traitement sont configurés pour effectuer éventuellement au moins une répétition des opérations mentionnées aux points a) et b) pour les éventuels paquets suivants jusqu'au transfert complet desdites données de ladite trame.

19. Transpondeur selon l'une des revendications 16 à 18, dans lequel pour un transfert de données de la deuxième interface de communication (IF2) vers la première interface de communication (IF1) en vue de l'encapsulation de ces données dans une trame,
les moyens de traitement (MT) sont configurés pour effectuer une lecture sans interruption des données de la trame par paquets successifs alternativement dans la deuxième mémoire et dans la première mémoire, et
lorsque l'une des mémoire a été lue par les moyens de traitement, la deuxième interface de communication est configurée pour délivrer une commande d'écriture à cette mémoire émanant de l'unité de traitement (MCU) et délivrer à cette mémoire un paquet à écrire émanant de l'unité de traitement, les moyens de traitement étant configuré pour simultanément lire le contenu de l'autre mémoire.

20. Transpondeur selon la revendication 19, dans lequel d) les moyens de traitement (MT) sont configurés pour effectuer une lecture d'un paquet desdites données dans la première mémoire précédemment écrit par l'unité de traitement via la deuxième interface de communication, et la deuxième interface de communication est configurée pour simultanément délivrer une commande d'écriture à la deuxième mémoire précédemment lue par les moyens de traitement et délivrer à cette deuxième mémoire le prochain paquet à écrire émanant de l'unité de traitement (MCU),
e) puis lorsque ledit paquet a été lu par les moyens de traitement dans la première mémoire, les moyens de traitement sont configurés pour effectuer une lecture dudit prochain paquet dans la deuxième mémoire et la deuxième interface de communication est configurée pour simultanément délivrer une commande d'écriture à la première mémoire et délivrer à cette première mémoire le paquet succédant audit prochain paquet et émanant de l'unité de traitement,
f) puis lorsque la deuxième mémoire a été lue, les moyens de traitement et la deuxième interface de traitement sont configurés pour effectuer éventuellement au moins une répétition des opérations mentionnées aux points d) et e) pour les éventuels paquets suivants jusqu'au transfert complet desdites données à transmettre dans ladite trame.

21. Transpondeur selon la revendication 13 ou 14, dans lequel ledit premier moyen de mémoire (MM1) comprend une mémoire volatile circulaire ayant un pointeur d'écriture (PE) et un pointeur de lecture (PL).

22. Transpondeur selon la revendication 21, dans lequel les données reçues sur la première interface sont contenues dans au moins une trame ayant une longueur supérieure à la capacité mémoire de la mémoire circulaire, et pour chaque trame reçue, les moyens de traitement (MT) sont configurés pour extraire les données à la volée, mot par mot.

23. Transpondeur selon la revendication 22, dans lequel pour un transfert de données de la première interface de communication (IF1) vers la deuxième interface de communication (IF2),
les moyens de traitement (MT) sont configurés pour effectuer une écriture des données par mots successifs dans la mémoire circulaire au rythme du pointeur d'écriture, et
la deuxième interface de communication est configurée pour simultanément délivrer des commande de lecture à la mémoire circulaire et délivrer à l'unité de traitement, au rythme du pointeur de lecture, des mots successifs précédemment écrits dans la mémoire circulaire,
le pointeur de lecture (PL) étant configuré pour cheminer derrière le pointeur d'écriture (PE).

24. Transpondeur selon la revendication 22 ou 23, dans lequel pour un transfert de données de la deuxième interface de communication (IF2) vers la première interface de communication (IF1), les moyens de traitement (MT) sont configurés pour effectuer une lecture de mots successifs desdites données dans la mémoire circulaire au rythme du pointeur de lecture, chaque mot lu ayant été au préalable écrite par l'unité de traitement via ladite deuxième interface de communication au rythme du pointeur d'écriture en remplacement d'un mot précédemment lu par les moyens de traitement.

25. Transpondeur selon l'une des revendications 21 à 24, dans lequel le circuit intégré comporte des moyens configurés pour délivrer à la deuxième interface de communication (IF2) une première information et une deuxième information destinées à l'unité de traitement (MCU), la première information indiquant le nombre de données disponibles à la lecture dans la mémoire circulaire (MM1), la deuxième information signalant un risque de perte de données en cas de non lecture de la mémoire circulaire (MM1) par l'unité de traitement MCU.

26. Transpondeur selon l'une des revendications 13 à 25, dans lequel le circuit intégré comprend un deuxième moyen de mémoire (MM2) configuré pour, dans un deuxième mode de transfert (MDTR2), stocker temporairement des données transférées entre les deux interfaces de communication, le deuxième moyen de mémoire étant configuré pour être accessible séquentiellement par les moyens de traitement et par ladite unité de traitement via ladite deuxième interface de communication.

27. Transpondeur selon la revendication 26, dans lequel le circuit intégré comprend des moyens de sélection (CEL) configurés pour sélectionner sur commande le premier ou le deuxième mode de transfert.

28. Système comprenant un transpondeur (TG) selon l'une des revendications 14 à 27, et l'unité de traitement (MCU) couplée à la deuxième interface de communication (IF2).
